# EUROPEAN PATENT APPLICATION

(11) **EP 4 550 120 A1**
(43) Date of publication of application: **07.05.2025**
(21) Application number: 24189289.2
(22) Date of filing: 17.07.2024
(51) Int. Cl.: G06F 8/40

(54) **ASSIGNMENT OF CONTAINERIZED WORKLOADS TO VIRTUAL PRIVATE CLOUD SUBNETS IN A MULTI-TENANT NETWORK**

(30) Priority: 18.07.2023 WO PCT/CN2023/107843; 23.08.2023 US 202318237387
(71) Applicant: VMware LLC, Palo Alto, CA 94304 (US)
(72) Inventor: Liu, Xiaopei, Beijing, 100190 (CN); Liu, Danting, Beijing, 100190 (CN); Liu, Wenfeng, Beijing, 100190 (CN); Shen, Jianjun, Redwood City, 94061 (US); Han, Donghai, Beijing, 100190 (CN)
(74) Representative: Dilg, Haeusler, Schindelmann Patentanwaltsgesellschaft mbH

(57) **Abstract**

The disclosure provides a method for assigning containerized workloads to isolated network constructs within a networking environment (100) associated with a container-based cluster. The method generally includes receiving, at the container-based cluster, a subnet port custom resource specification to initiate creation of a subnet port object to assign a node to a subnet within the networking environment (100), wherein one or more containerized workloads are running on the node, in response to receiving the subnet port custom resource specification, creating the subnet port object, and modifying a state of the container-based cluster to match a first intended state of the container-based cluster at least specified in the subnet port object, wherein modifying the state comprises assigning the node to the subnet in the networking environment (100).

## Description

### Claim of Priority

This application claims priority to International Application Number PCT/CN2023/107843, entitled "Assignment of Containerized Workloads to Virtual Private Cloud Subnets in a Multi-Tenant Network", filed on July 18, 2023. The disclosure of this application is hereby incorporated by reference.

Modern applications are applications designed to take advantage of the benefits of modern computing platforms and infrastructure. For example, modern applications can be deployed in a multi-cloud or hybrid cloud fashion. A multi-cloud application may be deployed across multiple clouds, which may be multiple public clouds provided by different cloud providers or the same cloud provider or a mix of public and private clouds. The term, "private cloud" refers to one or more on-premises data centers that might have pooled resources allocated in a cloud-like manner. Hybrid cloud refers specifically to a combination of public cloud and private clouds. Thus, an application deployed across a hybrid cloud environment consumes both cloud services executing in a public cloud and local services executing in a private data center (e.g., a private cloud). Within the public cloud or private data center, modern applications can be deployed onto one or more virtual machines (VMs), containers, application services, and/or the like.

A container is a package that relies on virtual isolation to deploy and run applications that depend on a shared operating system (OS) kernel. Containerized applications, also referred to as containerized workloads, can include a collection of one or more related applications packaged into one or more containers. In some orchestration platforms, a set of one or more related containers sharing storage and network resources, referred to as a pod, may be deployed as a unit of computing software. Container orchestration platforms automate the lifecycle of containers, including such operations as provisioning, deployment, monitoring, scaling (up and down), networking, and load balancing.

Kubernetes^{®} (K8S^{®}) software is an example open-source container orchestration platform that automates the deployment and operation of such containerized workloads. In particular, Kubernetes may be used to create a cluster of interconnected nodes, including (1) one or more worker nodes that run the containerized workloads (e.g., in a worker plane) and (2) one or more control plane nodes (e.g., in a control plane) having control plane components running thereon that control the cluster. Control plane components make global decisions about the cluster (e.g., scheduling), and can detect and respond to cluster events (e.g., starting up a new pod when a workload deployment's intended replication is unsatisfied). In some cases, a node, used to run containerized workloads or control plane components in a Kubernetes cluster, is a physical machine. In some cases, a node used to run containerized workloads or control plane components in a Kubernetes cluster is a VM configured to run on a physical machine running a hypervisor.

A Kubernetes platform is made up of a central database containing Kubernetes objects, or persistent entities, that are managed in the platform. Kubernetes objects are represented in configuration files, such as JavaScript Object Notation (JSON) or YAML files, and describe the intended state of a Kubernetes cluster of interconnected nodes used to run containerized workloads. A Kubernetes object is a "record of intent" - once an object is created, the Kubernetes system will constantly work to ensure that the intended state represented by the object is realized in the deployment.

There are two categories of objects in Kubernetes that are used to define the state of the cluster: native Kubernetes objects and custom resource (CR) objects, also referred to herein as "custom resources." Native Kubernetes objects may define configurations for pods, services, volumes, namespaces, deployments, replication controllers, and/or the like. These object types are supported and can be created/manipulated by a Kubernetes application programming interface (API). A custom resource, on the other hand, is an object that extends the Kubernetes API or allows a user to introduce their own API into a Kubernetes cluster. In particular, Kubernetes provides a standard extension mechanism, referred to as custom resource definitions (CRDs), such as in a YAML file, the CRD defining the building blocks (e.g., structure) of the custom resource. Instances of the custom resource as defined in the CRD can then be deployed in the cluster, such as by using a custom resource specification (e.g., another YAML file) that describes an intended state of the custom resource. As such, the CRD and custom resource specification enable the extension of the set of resources and objects that can be managed in a Kubernetes cluster. Unlike native Kubernetes objects, custom resources are not necessarily available in a default Kubernetes installation.

An example custom resource that may be introduced in Kubernetes is a pod VM. A pod VM is a VM having a kernel (e.g., a Linux^{®} kernel) and virtual resources used to run a pod (e.g., of containerized workloads) directly on a hypervisor A pod VM is a minimal VM optimized for hosting a pod. Generally, there is one pod per pod VM, although multiple pods may reside on a pod VM. Since each pod VM generally has a single pod, the lifecycle of each pod VM follows the lifecycle of the pod it is hosting, so that when the pod is created or deleted, the VM is created or deleted along with the pod. A pod VM may be managed and controlled by a computing virtualization platform, such as VMware's vSphere^{®} solution made commercially available by VMware, Inc. of Palo Alto, CA.

Another example custom resource that may be introduced in Kubernetes is a VM custom resource used to create a VM instance in Kubernetes. The created VM instance may be used alternative to, or in combination with, pod VMs to run containerized workloads in the Kubernetes environment.

Multiple tenants (e.g., users or customers) may run their containerized workloads on pod VMs and/or VMs (e.g., created via CRDs and custom resource specifications) in the same networking environment, such as in a public cloud. For security purposes, the containerized workloads of different tenants may need to be network isolated from one another within the networking environment. Further, a tenant may be divided into a number of sub-tenants, such that certain containerized workloads of different sub-tenants of a given tenant may also need to be network isolated from one another within the networking environment.

### Summary

One or more embodiments provide a method for assigning containerized workloads to isolated network constructs within a networking environment associated with a container-based cluster. The method generally includes receiving, at the container-based cluster, a subnet port custom resource specification to initiate creation of a subnet port object to assign a node to a subnet within the networking environment. One or more containerized workloads may be running on the node. The method generally includes, in response to receiving the subnet port custom resource specification, creating the subnet port object. Further, the method generally includes modifying a state of the container-based cluster to match a first intended state of the container-based cluster at least specified in the subnet port object. Modifying the state may include assigning the node to the subnet in the networking environment.

Further embodiments include a non-transitory computer-readable storage medium comprising instructions that cause a computer system to carry out the above methods, as well as a computer system configured to carry out the above methods.

### Brief Description of the Drawings

Figure 1A depicts example physical and virtual network components in a networking environment in which embodiments of the present disclosure may be implemented.
Figure 1B illustrates an example cluster for running containerized workloads in the network environment of Figure 1A, according to an example embodiment of the present disclosure.
Figure 2 illustrates example isolation constructs implemented to provide basic isolation capabilities for networking and security in multi-tenancy architecture, according to an example embodiment of the present disclosure.
Figure 3 illustrates example operations for connecting a virtual machine (VM) to a subnet of a virtual private cloud (VPC), according to an example embodiment of the present disclosure.
Figure 4 illustrates an example VM custom resource specification used to provision a VM in a container-based cluster, according to an example embodiment of the present disclosure.
Figure 5 illustrates an example network interface schema for creating a custom resource specification used to define a network attachment for a VM deployed in a container-based cluster, according to an example embodiment of the present disclosure.
Figure 6 illustrates an example subnet port custom resource specification template for creating a subnet port custom resource for a VM used to connect the VM to a VPC subnet in a networking environment, according to an example embodiment of the present disclosure.

To facilitate understanding, identical reference numerals have been used, where possible, to designate identical elements that are common to the figures. It is contemplated that elements disclosed in one embodiment may be beneficially utilized on other embodiments without specific recitation.

### Detailed Description

Techniques for assigning containerized workloads to various isolated network constructs in a multi-tenant networking environment are described herein. In particular, embodiments herein provide hierarchical isolation constructs to network isolate pod VMs and VMs running containerized workloads. In certain embodiments, the isolation constructs include organizations (orgs), projects, virtual private clouds (VPCs), and subnets. An org includes one or more projects, and a project includes one or more VPCs. An org may be associated with a particular tenant, such that different tenants are associated with different orgs. Further, a project may be associated with a sub-tenant of the tenant associated with the org that includes the project, such that different sub-tenants are associated with different projects. A VPC is a logically isolated section of the multi-tenant networking environment. The isolation may be in the form of policies such as network policies and permissions applied to virtual machines, pods, and/or containers running within the VPC. Since the VPC is a logical construct, "running within" could mean that the virtual machine, pod, or container is assigned to, tagged with, or otherwise associated with the VPC. One or more subnets are created for each VPC. A subnet, or subnetwork, is a logical partition of an internet protocol (IP) network.

Pod VMs and/or VMs may be assigned to the different subnets. Pod VMs and/or VMs that belong to each subnet are assigned IP addresses from a given classless inter-domain routing (CIDR) block associated with the corresponding subnet. The IP addresses may belong to an IP address space of a physical network to which the pod VMs and/or VMs of the subnet are coupled, or of a logical overlay network to which the pod VMs and/or VMs are coupled. The pod VMs and/or VMs of a given subnet may share the same connectivity, security, and availability requirements. Example connectivity provided by each subnet may include private connectivity (e.g., a private subnet), project connectivity (e.g., a project subnet), or public connectivity (e.g., a public subnet). Additional details regarding subnet connectivity modes are provided in U.S. Patent Application No. 18/121,548, filed March 14, 2023, and entitled "Multiple Connectivity Modes for Containerized Workloads in a Multi-Tenant Network," the entire contents of which are incorporated herein by reference.

To assign pod VMs and VMs (and accordingly containerized workloads running thereon) to each of these subnets, two custom resources may be used: a subnet port custom resource and a network interface custom resource. The subnet port custom resource may be generated when a subnet port custom resource specification is received by a Kubernetes cluster, such that the cluster generates the subnet port custom resource for a pod VM or VM. The subnet port custom resource may be generated to associate the pod VM or VM, and containerized workloads running therein, with a particular subnet in the networking environment.

The network interface custom resource may be generated when a network interface custom resource specification is received by a Kubernetes cluster, such that the cluster generates the network interface custom resource. The network interface custom resource may be generated to define, at least, a network attachment for a VM in the Kubernetes cluster, such that when a subnet port custom resource is also created for the VM to attach the VM to a particular subnet, the VM is capable of connecting to the subnet.

When assigning pod VMs and VMs to subnets, it may only be necessary to define a network attachment for a VM and not a pod VM (e.g., a network interface custom resource may only be created for a VM). In particular, because a pod VM may be managed and controlled by a computing virtualization platform, the computing virtualization platform, itself, may handle the networking for the pod VM, such that the creation of a network attachment is not necessary for the pod VM.

As such, techniques described herein provide a mechanism for attaching containerized workloads, running using various Kubernetes resources, to a network environment, and more specifically, to subnets having different levels of network isolation. Specifically, the different custom resources introduced herein allow for the efficient assignment of pod VMs and/or VMs, running containerized workloads, in the Kubernetes cluster to different subnets provisioned for the cluster.

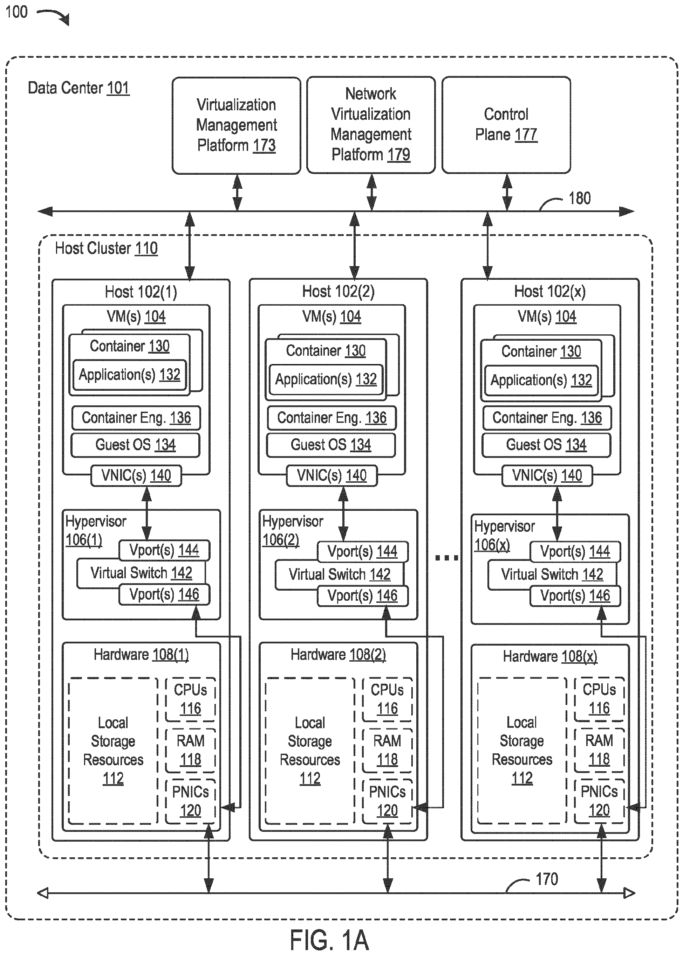

Figure 1A depicts example physical and virtual network components in a networking environment 100 in which embodiments of the present disclosure may be implemented. Networking environment 100 includes a data center 101. Data center 101 includes one or more hosts 102, a management network 180, a data network 170, a virtualization management platform 173, a network virtualization management platform 179, and a control plane 177.

Host(s) 102 may be communicatively connected to management network 180 and data network 170. Data network 170 and management network 180 enables communication between hosts 102, and/or between other components and hosts 102.

Data network 170 and management network 180 may be separate physical networks or may be logically isolated using a single physical network and separate VLANs or logical overlay networks, or a combination thereof. As used herein, the term "underlay" may be synonymous with "physical" and refers to physical components of networking environment 100. As used herein, the term "overlay" may be used synonymously with "logical" and refers to the logical network implemented at least partially within networking environment 100.

Host(s) 102 may be geographically co-located servers on the same rack or on different racks in any arbitrary location in the data center. Host(s) 102 may be in a single host cluster or logically divided into a plurality of host clusters. Each host 102 may be configured to provide a virtualization layer, also referred to as a hypervisor 106, that abstracts processor, memory, storage, and networking resources of a hardware platform 108 of each host 102 into multiple VMs 104₁ to 104_{N} (collectively referred to as VMs 104 and individually referred to as VM 104) that run concurrently on the same host 102.

Host(s) 102 may be constructed on a server grade hardware platform 108, such as an x86 architecture platform. Hardware platform 108 of each host 102 includes components of a computing device such as one or more processors (central processing units (CPUs)) 116, memory (random access memory (RAM)) 118, one or more network interfaces (e.g., physical network interfaces (PNICs) 120), storage 112, and other components (not shown). CPU 116 is configured to execute instructions that may be stored in memory 118, and optionally in storage 112. The network interface(s) enable hosts 102 to communicate with other devices via a physical network, such as management network 180 and data network 170.

In certain embodiments, hypervisor 106 runs in conjunction with an operating system (OS) (not shown) in host 102. In some embodiments, hypervisor 106 can be installed as system level software directly on hardware platform 108 of host 102 (often referred to as "bare metal" installation) and be conceptually interposed between the physical hardware and the guest operating systems executing in the VMs 104. It is noted that the term "operating system," as used herein, may refer to a hypervisor.

Each of VMs 104 running on each host 102 may include virtual interfaces, often referred to as virtual network interfaces (VNICs), such as VNICs 140, which are responsible for exchanging packets between VMs 104 and hypervisor 106, such as with a virtual switch 142 running in the hypervisor 106. The virtual switch on each host operates as a managed edge switch implemented in software by a hypervisor on each host. Virtual switches provide packet forwarding and networking capabilities to VMs running on the host. VNICs 140 can connect to Vports 144, provided by virtual switch 142. In this context "connect to" refers to the capability of conveying network traffic, such as individual network packets, or packet descriptors, pointers, identifiers, etc., between components so as to effectuate a virtual datapath between software components. Virtual switch 142 also has Vport(s) 146 connected to PNIC(s) 120, such as to allow VMs 104 (and containers 130 running in VMs 104, as described below) to communicate with virtual or physical computing devices outside of host 102 via data network 170 and/or management network 180.

Further, each of VMs 104 implements a virtual hardware platform that supports the installation of a guest OS 134 which is capable of executing one or more applications 132. Guest OS 134 may be a standard, commodity operating system. Examples of a guest OS include Microsoft Windows, Linux, and/or the like. Applications 132 may be any software program, such as a word processing program.

Network virtualization management platform 179 is a physical or virtual server that orchestrates a software-defined network layer. A software-defined network layer includes logical network services executing on virtualized infrastructure (e.g., of hosts 102). The virtualized infrastructure that supports logical network services includes hypervisor-based components, such as resource pools, distributed switches, distributed switch port groups and uplinks, etc., as well as VM-based components, such as router control VMs, load balancer VMs, edge service VMs, etc. Logical network services include logical switches and logical routers, as well as logical firewalls, logical virtual private networks (VPNs), logical load balancers, and the like, implemented on top of the virtualized infrastructure.

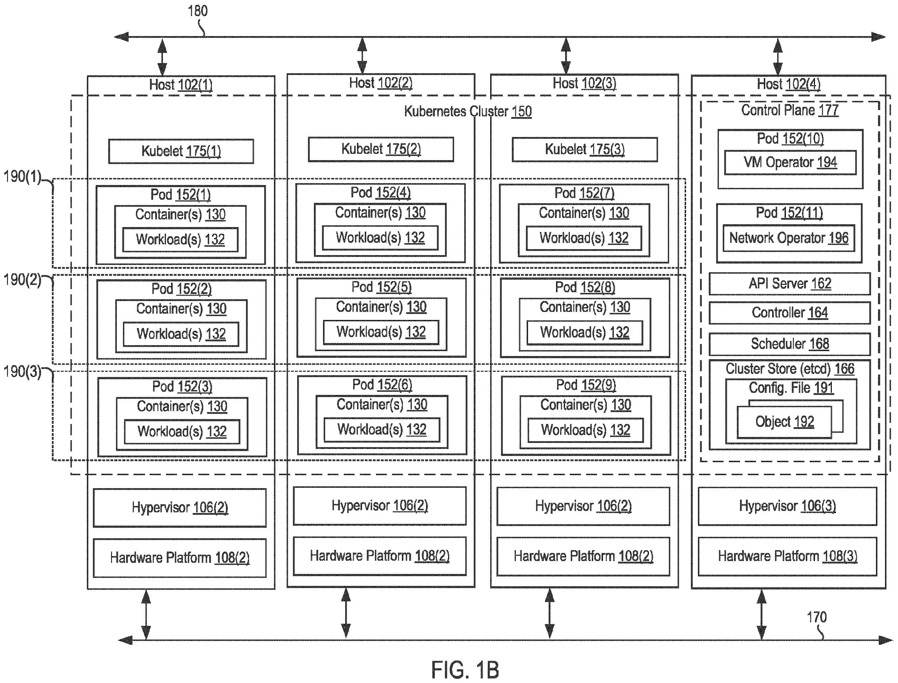

In certain embodiments, network virtualization management platform 179 includes one or more virtual servers deployed as VMs. In certain embodiments, network virtualization management platform 179 installs agents in hypervisor 106 to add a host 102 as a managed entity, referred to as an edge transport node. An edge transport node may be a gateway (e.g., implemented by a router) between the internal logical networking of hosts 102 and an external network. Data Center 101 also includes physical network devices (e.g., physical routers/switches), which are not explicitly shown in Figure 1.

One example of a software-defined networking platform that can be configured and used in embodiments described herein as network virtualization management platform 179 and the software-defined network layer is a VMware NSX^{®} platform made commercially available by VMware, Inc. of Palo Alto, California.

Virtualization management platform 173 is a computer program that executes in a host 102 in data center 101, or alternatively, virtualization management platform 173 runs in one of VMs 104. Virtualization management platform 173 is configured to carry out administrative tasks for data center 101, including managing hosts 102, managing (e.g., configuring, starting, stopping, suspending, etc.) VMs 104 running within each host 102, provisioning VMs 104, transferring VMs 104 from one host 102 to another host 102, and/or the like.

In certain embodiments, data center 101 includes a container orchestrator that implements an orchestration control plane 177 (also referred to herein as "control plane 177"), such as a Kubernetes control plane, to deploy and manage applications 132 and/or services thereof on hosts 102, of a host cluster 110, using containers 130. In particular, each VM 104 includes a container engine 136 installed therein and running as a guest application under control of guest OS 134. Container engine 136 is a process that enables the deployment and management of virtual instances, referred to herein as "containers," in conjunction with OS-level virtualization on guest OS 134 within VM 104 and the container orchestrator. Containers 130 provide isolation for user-space processes executing within them. Containers 130 encapsulate an application 132 (and its associated workloads) as a single executable package of software that bundles application code together with all of the related configuration files, libraries, and dependencies required for it to run.

Control plane 177 runs on a cluster of hosts 102 and may deploy containerized applications as containers 130 on the cluster of hosts 102. Control plane 177 manages the computation, storage, and memory resources to run containers 130 in the host cluster. Further, control plane 177 supports the deployment and management of applications (or services) in the container-based cluster using containers 130. In certain embodiments, hypervisor 106 is integrated with control plane 177 to provide a "supervisor cluster" (i.e., management cluster) that uses VMs 104 to implement both control plane nodes and compute objects managed by control plane 177 (e.g., Kubernetes control plane).

In certain embodiments, control plane 177 deploys applications 132 as pods of containers running on hosts 102, either within VMs 104 or directly on an OS of hosts 102. A pod is a group of one or more containers 130 and a specification for how to run the containers 130. A pod may be the smallest deployable unit of computing that can be created and managed by control plane 177.

An example container-based cluster for running containerized applications 132 is illustrated in Figure 1B. While the example container-based cluster shown in Fig. 1B is a Kubernetes cluster 150, in other examples, the container-based cluster may be another type of container-based cluster based on container technology, such as Docker Swarm clusters.

As illustrated in Figure 1B, Kubernetes cluster 150 is formed from a combination of one or more pods 152 including one or more containers 130, one or more kubelets 175, and a control plane 177 running on one or more nodes. As described above, a node may be a physical machine, such as a host 102, or a VM 104 (not shown in Fig. 1B) configured to run on a host 102 running a hypervisor 106. The nodes may be a combination of worker nodes (e.g., running pods 152, containers 130, and kubelets 175) and control plane nodes (e.g., running components of control plane 177). For the example Kubernetes cluster 150, the nodes are hosts 102, and more specifically, hosts 102(1), 102(2), and 102(3) are worker nodes while host 102(4) is a control plane node.

Further, although not illustrated in Figure 1B, Kubernetes cluster 150 may include one or more kube proxies. A kube proxy is a network proxy that runs on each host 102 in Kubernetes cluster 150 that is used to maintain network rules. These network rules allow for network communication with pods 152 from network sessions inside and/or outside of Kubernetes cluster 150.

Pods 152 and/or containers 130 may be organized into one or more namespaces 190 in Kubernetes cluster 150. For example, as illustrated, pods 152(1), 152(4), and 152(7), as well as containers 130 running thereon, belong to a first namespace 190(1), while other pods 152 and containers 130 belong to one of namespace 190(2) or namespace 190(3). As described above, namespaces help to provide API and resource isolation between user applications 132 in Kubernetes cluster 150.

Kubelet 175 (e.g., on each worker node) is an agent that helps to ensure that one or more pods 152 run on each worker node according to a defined state for the pods 152, such as defined in a configuration file. Each pod 152 may include one or more containers 130.

Control plane 177 (e.g., running on control plane node(s)) includes components such as an API server 162, a cluster store (etcd) 166, controller(s) 164, and scheduler(s) 168. In certain embodiments, control plane 177 further includes a VM operator 194 and/or a network operator 196. Control plane 177's components make global decisions about Kubernetes cluster 150 (e.g., scheduling), as well as detect and respond to cluster events. Control plane 177 manages and controls every component of Kubernetes cluster 150. Control plane 177 handles most, if not all, operations within Kubernetes cluster 150, and its components define and control Kubernetes cluster 150's configuration and state data. Control plane 177 configures and runs the deployment, management, and maintenance of the containerized applications 132. As such, ensuring high availability of the control plane 177 is important for container deployment and management.

API server 162 operates as a gateway to Kubernetes cluster 150. As such, a command line interface, web user interface, users, and/or services communicate with Kubernetes cluster 150 through API server 162. One example of a Kubernetes API server 162 is kube-apiserver. Instances of kube-apiserver are designed to scale horizontally-that is, this component scales by deploying more instances. Several instances of kube-apiserver may be run, and traffic may be balanced between those instances.

Controller(s) 164 is responsible for running and managing controller processes in Kubernetes cluster 150. For example, control plane 177 may have (e.g., four) control loops called controller processes, that watch the state of Kubernetes cluster 150 and try to modify the current state of Kubernetes cluster 150 to match an intended state of Kubernetes cluster 150. In certain embodiments, controller processes of controller(s) 164 are configured to monitor for changes to the state of Kubernetes cluster 150.

Scheduler(s) 168 is configured to allocate new pods 152 to the worker nodes (e.g., hosts 102). Additionally, scheduler(s) 168 may be configured to distribute applications 132, across containers 130, pods 152, and/or nodes (e.g., in some cases, hosts 102) that are assigned to use resources of hardware platform 108. Resources may refer to processor resources, memory resources, networking resources, and/or the like. In some cases, scheduler(s) 168 may schedule newly created containers 130 to one or more of the nodes in Kubernetes cluster 150.

Cluster store (etcd) 166 is a data store, such as a consistent and highly-available key value store, used as a backing store for Kubernetes cluster 150 data. In certain embodiments, cluster store (etcd) 166 stores configuration file(s) 191, made up of one or more manifests or specifications that declare intended system infrastructure and applications 132 to be deployed in Kubernetes cluster 150. Kubernetes objects 192, or persistent entities, can be created, updated, and deleted based on configuration file(s) 191 to represent the state of Kubernetes cluster 150.

As described above, these objects may be custom resource objects (e.g., custom resources created by Kubernetes cluster based on custom resource specifications received by the cluster), such as network interface objects and subnet port objects, created specifically for Kubernetes cluster 150. The network interface objects may be used to define network attachments for VMs created and deployed in Kubernetes cluster 150. Additionally, the subnet port objects may be created to assign one or more pod VMs and/or VMs (and their applications 132 running thereon) to subnets created for the networking environment of Kubernetes cluster 150. For example, a subnet port object may specify a VM 104 or pod VM 104, running an application 132, in Kubernetes cluster 150 that is to be associated with a particular subnet.

In certain embodiments, control plane 177 includes a VM operator 194. A Kubernetes operator, such as VM operator 194, is an application-specific controller that extends the functionality of the Kubernetes API to create, configure, and/or manage instances of complex products on behalf of a Kubernetes user. More specifically, VM operator 194 allows for the provisioning of VMs 104, and their guest OSs, in Kubernetes cluster 150, declaratively, or in other words, in a "desired-state manner" similar to other resources (e.g., pods, pod VMs, etc.) provisioned in Kubernetes. Further, VM operator 194 enables management of such VMs via the Kubernetes API. In certain embodiments, VM operator 194 is configured to create network interface objects in Kubernetes cluster 150 for VMs to connect such VMs to a networking environment of Kubernetes cluster 150. VM operator 194 may be running as a pod (e.g., pod 152(10) in Figure 1B) on control plane 177 in Kubernetes cluster 150.

In certain embodiments, control plane 177 includes a network operator 196. Network operator 196 is an operator configured to leverage network resources to manage networking for Kubernetes cluster 150. In certain embodiments, network operator 196 is configured to reconcile a subnet port custom resource specification created for each resource (e.g., VM, pod VM, etc.) in Kubernetes cluster 150. In certain embodiments, network operator 196 is configured to provide, to VM operator 194, information about allocated IP addresses (and/or media access control addresses) for resources in Kubernetes cluster 150 after such resources have been connected to a particular VPC subnet, and thus assigned an IP (and/or MAC) address associated with the subnet. Network operator 196 may be running as a pod (e.g., pod 152(11) in Figure 1B) on control plane 177 in Kubernetes cluster 150.

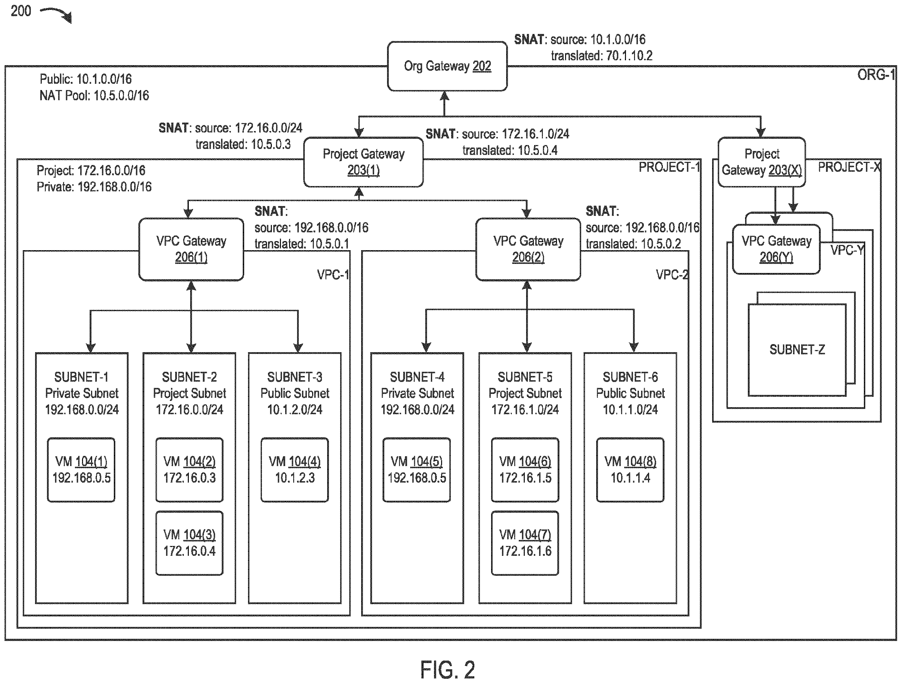

Figure 2 illustrates example isolation constructs implemented to provide basic isolation capabilities for networking and security in a multi-tenancy architecture 200. As illustrated in Figure 2, the isolation constructs implemented for networking and security isolation in multi-tenancy architecture 200 include orgs (although only one is illustrated in Figure 2, other orgs may exist), projects, VPCs, and subnets. These isolation constructs may be created for a container-based cluster, such as Kubernetes cluster 150 illustrated in Figure 1B, to provide network isolation among containerized applications. In particular, as illustrated in Figure 2, VMs 104(1)-104(8), having application running thereon, may be assigned to different Subnets 1-6 in multi-tenancy architecture 200.

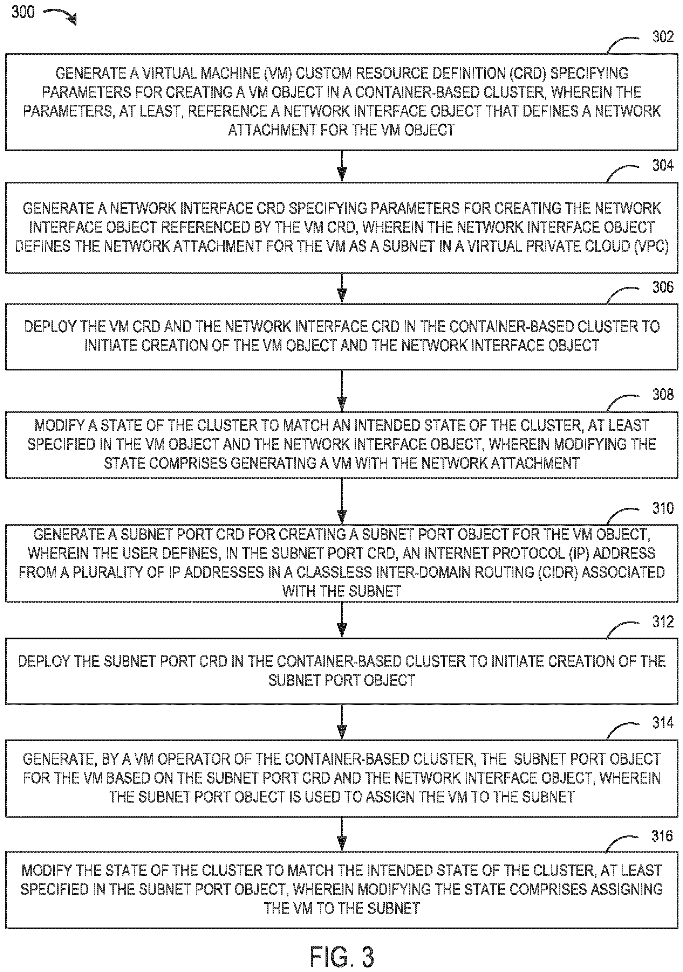

According to embodiments described herein, assignment of these VMs 104(1)-104(8) to Subnets 1-6 to connect VMs 104(1)-104(8) to these subnets is accomplished via use of subnet port custom resource specifications and/or network interface custom resource specifications. For example, a VM 104 instance, created from a VM custom resource in Kubernetes cluster 150, may be assigned to one of Subnets 1-6 where both a subnet port custom resource specification and a network interface custom resource specification are created and received by Kubernetes cluster 150 for the VM. Creation of the VM in Kubernetes cluster 150 via a VM custom resource specification, defining a network interface for the VM, and assigning the VM to a VPC subnet is described in detail below with respect to operations 300 illustrated in Figure 3.

As another example, where VM 104 instance is a pod VM, assignment of VM 104 to one of Subnets 1-6 may be accomplished via use of only a subnet port custom resource specification (e.g., a network interface custom resource specification may not be necessary). As such, generating and deploying a subnet port custom resource specification in Kubernetes cluster 150 may create a subnet port object for pod VM 104 to connect pod VM 104 to a particular VPC subnet.

In Figure 2, the illustrated org corresponds to a single tenant in architecture 200. The org may include one or more projects (e.g., {Project-1, ..., Project-X}). Each project is associated with a sub-tenant of a tenant corresponding to the org (and multiple projects may be created for a single sub-tenant). Projects are created under each org to support independent sets of configurations for each sub-tenant of the tenant which the org corresponds to. Each org (shown as org-1) is associated with an org gateway 202. Each project (shown as project-1 and project-X) is associated with a project gateway 203. Further, each VPC (shown as VPC-1, VPC-2, and VPC-Y) is associated with a VPC gateway 206.

Each project is, conceptually, a container of VPCs. In particular, each project may include one or more VPCs, such as example Project-1 which includes {VPC-1, VPC-2} in architecture 200. For example, the VPCs of a particular project may be associated with the project by identifiers for the VPCs included in a project configuration, or identifiers of the project being included in configurations for each of the associated VPCs, or some other data structure may provide some indication of the association of project to a set of VPCs within that project.

Each VPC includes one or more subnets. The number of subnets created per VPC may depend on a number of subnet objects defined (e.g., via subnet custom resources) for architecture 200. The subnets may be public subnets, project subnets, and/or private subnets. For example, VPC-1 includes subnet-1 (a private subnet), subnet-2 (a project subnet), and subnet-3 (a public subnet). VPC-2 includes subnet-4 (a private subnet), subnet-5 (a project subnet), and subnet-6 (a public subnet).

In the example architecture, IP addresses in private IP CIDR block 192.168.0.0/16 are reserved for private subnets in each given VPC of the org. For example, all IP addresses in private IP CIDR block 192.168.0.0/16 can be assigned to VMs in VPC-1, and all IP addresses in private IP CIDR block 192.168.0.0/16 can also be assigned to VMs in VPC-2, such that a VM in VPC-1 and a VM in VPC-2 can have the same IP address from private IP CIDR block 192.168.0.0/16. In the presented example, each private subnet is allocated one or more IP addresses from the private IP CIDR block 192.168.0.0/16. For example, subnet-1 of VPC-1 is allocated IP addresses in CIDR block 192.168.0.0/24, which is a portion of the IP addresses in the private CIDR block 192.168.0.0/16. Further, subnet-4 of VPC-2 is also allocated IP addresses in CIDR block 192.168.0.0/24, as the same IP addresses can be assigned to VMs in different VPCs.

Further, in the example architecture, IP addresses in a project having IP CIDR block 172.16.0.0/16 are reserved for project subnets in each given project of the org. For example, all IP addresses in project IP CIDR block 172.16.0.0/16 can be assigned to VMs in project-1, and all IP addresses in project IP CIDR block 172.16.0.0/16 can also be assigned to VMs in project-X, such that a VM in project-1 and a VM in project-X can have the same IP address from the project IP CIDR 172.16.0.0/16. However, two VMs in the same project cannot have the same IP address from the project IP CIDR 172.16.0.0/16. For example, although VM 104(2) and VM 104(6) belong to different VPCs, both VM 104(2) and VM 104(6) belong to project-1; thus, an IP address allocated to VM 104(2) (e.g., IP address 172.16.0.3) is different than an IP address allocated to VM 104(6) (e.g., IP address 172.16.1.5). Each project subnet is allocated one or more IP addresses from the project IP CIDR block. For example, subnet-2 of VPC-1 in project-1 is allocated IP addresses in CIDR block 172.16.0.0/24, which is a portion of the IP addresses in the project IP CIDR block 172.16.0.0/16. Further, subnet-5 of VPC-2 also in project-1 is allocated IP addresses in CIDR block 172.16.1.0/24, which is a different portion of the IP addresses in the project IP CIDR block 172.16.0.0/16, such that VMs in subnet-5 are not assigned the same IP addresses as VMs in subnet-2.

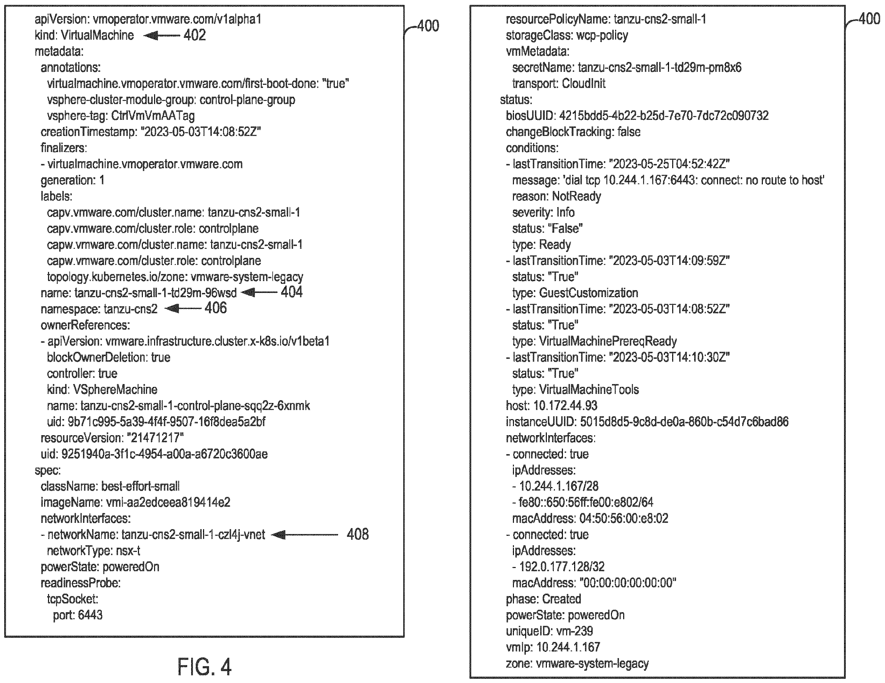

IP addresses in public IP CIDR block 10.1.0.0/16 are reserved for public subnets in each given org. For example, all IP addresses in public IP CIDR block 10.1.0.0/16 can be assigned to VMs in org-1, and all IP addresses in public IP CIDR block 10.1.0.0/16 can also be assigned to VMs in another org not illustrated in Figure 4, but part of the example multi-tenancy architecture 200. Each public subnet is allocated one or more IP addresses from the public IP CIDR block. For example, subnet-3 of VPC-1 is allocated IP addresses in CIDR block 10.1.2.0/24, which is a portion of the IP addresses in the public IP CIDR block 10.1.0.0/16. Further, subnet-6 of VPC-2 is allocated IP addresses in CIDR block 10.1.1.0/24, which is another portion of the IP addresses in the public IP CIDR block 10.1.0.0/16.

As shown, each subnet includes one or more VMs 104(1-8) (e.g., that may be provisioned via CRDs and custom resource specifications). The number of VMs assigned to each subnet may depend on a number of subnet port objects defined (e.g., via subnet port custom resource specifications) for architecture 200. VMs assigned to each subnet are assigned IP addresses from an IP CIDR block of the subnet. For example, VM 104(1), assigned to private subnet-1, is assigned IP address 192.168.0.5, which is an IP address in the private IP CIDR block 192.168.0.0/24 assigned to private subnet-1.

A VM assigned to a private subnet is only directly addressable by its assigned IP address from the private IP CIDR block within the VPC itself. For the VM to be addressable outside the VPC, NAT (e.g., static NAT, dynamic NAT, port-level multiplexed NAT, overlapping NAT, etc.) is used. For example, VM 104(1) may be addressed by its private IP address when VM 104(1) is the destination of a packet sent from another VM also assigned to private subnet-1 (e.g., not shown within Figure 2) given both VMs are within the same VPC (e.g., VPC-1). However, VM 104(1) may not be directly addressed by its private IP address when VM 104(1) is the destination of a packet sent from VM 104(5) (e.g., part of private subnet-4 of VPC-2). Instead, VPC Gateway 206(1) is configured to perform source NAT (SNAT) for egress packets sent from VMs in subnet-1 to destinations outside subnet-1, and perform destination NAT (DNAT) for ingress packets sent to VMs in subnet-1 from destinations outside subnet-1. For example, VPC Gateway 206(1) is configured to perform NAT to translate private IP addresses in the private IP CIDR block to IP address 10.5.0.1 (a public IP address in a NAT CIDR block 10.5.0.0/16 reserved for NAT in org-1). Accordingly, for VM 104(5) to send a packet to VM 104(1), VM 104(5) may include in the packet the destination IP address 10.5.0.1 and a corresponding destination port number associated with VM 104(1). Based on the destination IP address 10.5.0.1, the packet is routed to VPC gateway 206(1), which based on NAT tables, translates the destination IP address 10.5.0.1 and destination port number to destination IP address 192.168.0.5, and sends the packet with the destination IP address 192.168.0.5 to VM 104(1). Accordingly, each VPC gateway 206 is configured to perform DNAT for ingress packets with a destination address associated with the VPC gateway 206 that is in the NAT CIDR block (e.g., IP address 10.5.0.1 for VPC gateway 206(1) and IP address 10.5.0.2 for VPC gateway 206(2)) to a corresponding private IP address in a private subnet in the VPC associated with the VPC gateway 206. Further, each VPC gateway 206 is configured to perform SNAT for egress packets with a source address in a private subnet in the VPC associated with the VPC gateway 206 and a destination address outside a private subnet in the VPC associated with the VPC gateway 206.

Similarly, a VM assigned to a project subnet is only directly addressable by its assigned IP address from the project IP CIDR block within the project itself. For example, VM 104(6) assigned to project subnet-5 is directly addressable by its project IP address 172.16.1.5 by VM 104(2) also within a project subnet (e.g., project subnet-2). For a VM assigned to a project to be addressable outside the project, NAT is used. Accordingly, each project gateway 203 is configured to perform DNAT for ingress packets with a destination address associated with the project gateway 203 that is in the NAT CIDR block (e.g., IP address 10.5.0.4 for project gateway 203(1)) to a corresponding project IP address in a project subnet in the project associated with the project gateway 203. Further, each project gateway 203 is configured to perform SNAT for egress packets with a source address in a project subnet in the project associated with the project gateway 203 and a destination address outside a project subnet in the project associated with the project gateway 203.

Further, a VM assigned to a public subnet is only directly addressable by its assigned IP address from the public IP CIDR block within the org itself. For the VM to be addressable outside the org, NAT is used. For example, each org gateway 202 is configured to similarly perform NAT for the org.

Figure 3 illustrates example operations 300 for creating a VM in a Kubernetes cluster, such as Kubernetes cluster 150 illustrated in Figure 1B, and connecting the VM to a VPC subnet provisioned for the cluster. In particular, Kubernetes cluster 150 may be a multi-tenant cluster shared among multiple tenants. In the shared infrastructure, isolated networking and security topologies may be provisioned for each of the different tenants. For example, orgs, projects, VPCs, and subnets may be implemented to provide basic isolation capabilities for networking and security among the tenants, their sub-tenants, and applications 132 in Kubernetes cluster 150.

Operations 300 begin, at operation 302, by generating a VM custom resource specification specifying parameters for creating a VM object in Kubernetes cluster 150. The VM custom resource specification may be created by a user. The parameters, included in the VM custom resource specification, may include, at least, a reference to a network interface object that defines a network attachment for the VM object.

Operations 300 proceed, at operation 304, by further generating a network interface custom resource specification specifying parameters for creating the network interface object referenced by the VM custom resource specification. The network interface custom resource specification may also be generated by the user. The network interface object (e.g., to be created from the network interface custom resource specification) may define the network attachment for the VM as a subnet in a VPC provisioned for Kubernetes cluster 150.

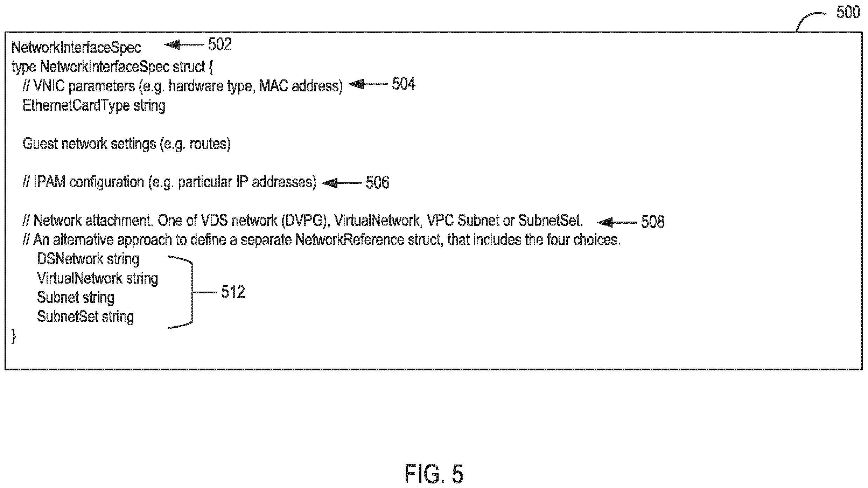

Figure 4 illustrates an example VM custom resource specification 400 used (e.g., at operation 302) to spin up a VM in a container-based cluster, while figure 5 illustrates an example network interface custom resource specification 500 used (e.g., at operation 304) to define a network attachment for the VM deployed in the container-based cluster.

VM custom resource specification 400, illustrated in Figure 4, may be used to create a VM object for Kubernetes cluster 150 (e.g., type of custom resource defined as "kind: VirtualMachine" at 402). As illustrated at 404 and 406, respectively, example VM custom resource specification includes fields for specifying a name, for example, "tanzu-cns2-small-1-td29m-96wsd," and a namespace, for example, "tanzu-cns2," (e.g., identifying the namespace where the VM is to be deployed) for the VM. Further, example VM custom resource specification 400 may include a field, "networkName," at 408. A networkName defined, at 408, for the VM may be used to reference a network interface object created for the VM. In particular, the network interface object may be created with a network name such that, by VM custom resource specification 400 specifying the network name of the network interface object, it is understood that VM custom resource specification 400 is referencing that particular network interface object.

Network interface schema 500, illustrated in Figure 5, represents an outline for creating a network interface custom resource specification that may be used to create a network interface object for a particular VM in Kubernetes cluster 150. Network interface schema 500 (e.g., labeled as "NetworkInterfaceSpec" at 502) indicates that a network interface custom resource specification may include information about virtual NIC (VNIC) parameters (e.g. EthernetCardType and guest network settings (e.g. routes)) at 504, IP address management (IPAM) configuration at 506, and network attachment at 508. Network interface schema 500 also indicates that, in certain embodiments, a network interface custom resource specification further includes information about a distributed switch (DS) network, a virtual network, a subnet, and/or a subnet set (e.g., shown at 512) to specify VNIC network attachment. For example, a value for at least one of these four parameters may be specified, in the network interface custom resource specification, to identify a network that the network interface object is to be connected to. The value may be a string used to identify either the DS network, the virtual network, the subnet, or the subnet set. DSs are virtual switches that span across multiple hosts and enable VMs running on these hosts to communicate with one another. A virtual network connects VMs, virtual servers (e.g., hosts), or other devices across different office and/or data center locations. As described above, a subnet, or subnetwork, is a logical partition of an IP network. A subnet is created from a subnet custom resource specification that specifies a subnet CIDR for the subnet. A subnet set is also a logical partition of an IP network that is created from a custom resource specification (e.g., a subnet set custom resource specification). However, in the subnet set custom resource specification a subnet CIRD is not specification, instead the subnet created from the specification may be automatically allocated IP addresses from an IP block created for a public IP block or private IP CIDR.

When a network interface object, created from this network interface custom resource specification 500, is referenced by a VM object (e.g., created from a VM custom resource specification, such as VM custom resource specification 400 illustrated in Figure 4), then a network interface for a VM instance (e.g., created from the VM object) may be created based on information included in the network interface object.

Returning to Figure 3, operations 300 proceed, at operation 306, by deploying the VM custom resource specification and the network interface custom resource specification in Kubernetes cluster 150. Deployment of the VM custom resource specification initiates creation, by Kubernetes cluster 150, of the VM object defined by the VM custom resource specification. Additionally, deployment of the network interface custom resource specification initiates creation, by Kubernetes cluster 150, of the network interface objected defined by the network interface custom resource specification.

Operations 300 proceed, at operation 308, with modifying a state of Kubernetes cluster 150 to match an intended state of Kubernetes cluster 150 (e.g., the new intended state), at least specified in the VM object and the network interface object now created in the cluster. The new intended state includes the creation of a VM with a network attachment, as defined by the VM object and the network interface object. As such, at operation 308, the VM, with the network attachment, is provisioned in Kubernetes cluster 150.

Operations 300 proceed, at operation 310, with generating a subnet port custom resource specification for creating a subnet port object for the VM object. The subnet port object (e.g., to be created from the subnet port custom resource specification) may be used to assign the VM instance (e.g., provisioned at operation 308) to a subnet provisioned for Kubernetes cluster 150.

The subnet port custom resource specification, identifies and/or specifies different attributes of the subnet port object. For example, the subnet port custom resource specification may define, for the VM instance, an IP address from a plurality of IP addresses in a CIDR associated with subnet, which the VM is to be attached to. In certain other embodiments, the subnet port object may be defined using a pre-existing subnet port object, with its attributes defined. For example, a user may select a pre-existing subnet port object via a GUI.

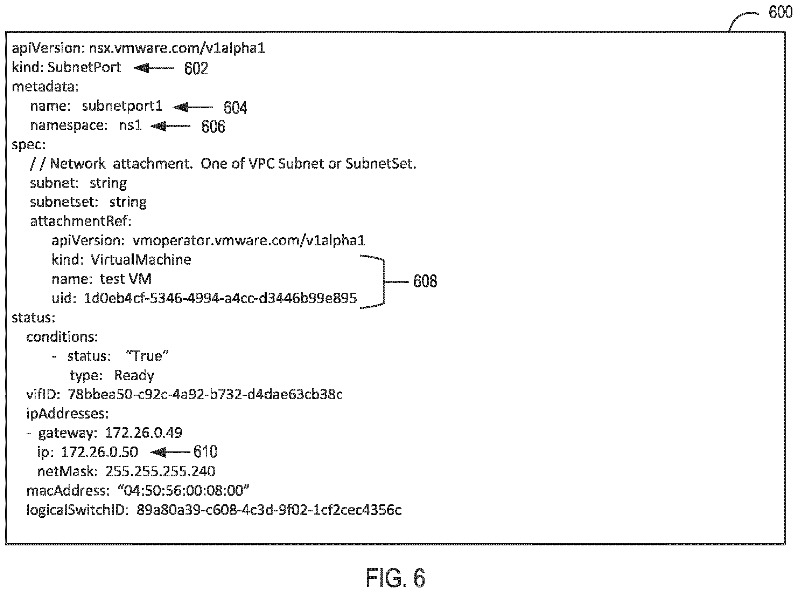

Figure 6 illustrates an example subnet port custom resource specification template 600 (e.g., of a subnet port custom resource) used to create a subnet port object for Kubernetes cluster 150 in operations 300 (e.g., type of custom resource defined as "kind: SubnetPort" at 602). As illustrated at 604 and 606, example subnet port custom resource specification template 600 is used to create a subnet port object named "subnetport1" in namespace "ns1." The subnet port object may be created to assign the VM with name "test VM" and uid "ld0eb4cf-5346-4994-a4cc-d3446b99e895" to a particular subnet, as illustrated at 608. The subnet for which the VM is assigned is based on the IP address specified at 610 in subnet port custom resource specification template 600. For example, as shown, the IP address to be assigned to the VM is "172.26.0.50." For this example, IP address "172.26.0.50" may be an IP address selected among a plurality of IP addresses in an IP address CIDR block associated with a project subnet (e.g., CIDR block 172.26.0.48/28). As such, based on assigning the VM IP address "172.26.0.50," the VM may be assigned to the project subnet when the subnet port object is created from subnet port custom resource specification template 600 and the object (e.g., intended state defined by the object) is realized in Kubernetes cluster 150.

Operations 300 proceed, at operation 312, by deploying the subnet port custom resource specification template in Kubernetes cluster 150 to initiate creation of the subnet port object.

Operations 300 then proceed, at operation 314, with a VM operator of Kubernetes cluster 150, such as VM operator 194 in Figure 1B, generating the subnet port object for the VM based on the subnet port custom resource specification and the network interface object (e.g., created subsequent to operation 306). For example, VM operator 194 obtains network interface attributes defined for the VM in the network interface object (e.g., subnet name, subnet set name, IPAM configuration, etc.) and uses these attributes, in addition to the information provided by the user in the subnet port custom resource specification, to create the subnet port object for the VM (e.g., VM operator 194 copies the attributes relevant for networking by the VM to the subnet port object/specification).

Creation of the subnet port object assigns the VM identified in the subnet port custom resource specification to the intended subnet (e.g., having a public, project, or private connectivity mode) by assigning the specified IP address to the VM. Once the subnet port object is created, the system will work to ensure that the VM that is to be assigned to the subnet defined by the subnet port object is realized in the deployment. In particular, operations 300 proceed, at 316, with modifying a state of Kubernetes cluster 150 to match an intended state of Kubernetes cluster 150 (e.g., the new intended state), at least specified in the subnet port object The new intended state includes the assignment of the VM to the subnet identified in the subnet port object. As such, at operation 316, the VM is connected to the identified subnet.

In certain embodiments, multiple subnet port objects are created to assign VMs, and their applications 132 running thereon, in the Kubernetes deployment to one or more subnets.

As described above, example operations 300 illustrated in Figure 3 are used to connect a VM, having one or more containerized workloads running thereon, to a VPC subnet, where the VM is a VM custom resource. Operations 300 include also generating a network interface object for the VM to connect the VM to the VPC subnet. In cases, however, where the VM is a pod VM, generation of a network interface object for the pod VM is not needed. Instead, to attach the pod VM to the VPC subnet, only a subnet port custom resource specification may be generated and deployed to create the subnet port object to assign the pod VM to the VPC subnet. The subnet port custom resource specification generated for the pod VM may be similar to subnet port custom resource specification 600 illustrated in Figure 6.

It should be understood that, for any process described herein, there may be additional or fewer steps performed in similar or alternative orders, or in parallel, within the scope of the various embodiments, consistent with the teachings herein, unless otherwise stated.

The various embodiments described herein may employ various computer-implemented operations involving data stored in computer systems. For example, these operations may require physical manipulation of physical quantities-usually, though not necessarily, these quantities may take the form of electrical or magnetic signals, where they or representations of them are capable of being stored, transferred, combined, compared, or otherwise manipulated. Further, such manipulations are often referred to in terms, such as producing, identifying, determining, or comparing. Any operations described herein that form part of one or more embodiments of the invention may be useful machine operations. In addition, one or more embodiments of the invention also relate to a device or an apparatus for performing these operations. The apparatus may be specially constructed for specific required purposes, or it may be a general purpose computer selectively activated or configured by a computer program stored in the computer. In particular, various general purpose machines may be used with computer programs written in accordance with the teachings herein, or it may be more convenient to construct a more specialized apparatus to perform the required operations.

The various embodiments described herein may be practiced with other computer system configurations including hand-held devices, microprocessor systems, microprocessor-based or programmable consumer electronics, minicomputers, mainframe computers, and the like.

One or more embodiments of the present invention may be implemented as one or more computer programs or as one or more computer program modules embodied in one or more computer readable media. The term computer readable medium refers to any data storage device that can store data which can thereafter be input to a computer system-computer readable media may be based on any existing or subsequently developed technology for embodying computer programs in a manner that enables them to be read by a computer. Examples of a computer readable medium include a hard drive, network attached storage (NAS), read-only memory, random-access memory (e.g., a flash memory device), a CD (Compact Discs) --CD-ROM, a CD-R, or a CD-RW, a DVD (Digital Versatile Disc), a magnetic tape, and other optical and non-optical data storage devices. The computer readable medium can also be distributed over a network coupled computer system so that the computer readable code is stored and executed in a distributed fashion.

Although one or more embodiments of the present invention have been described in some detail for clarity of understanding, it will be apparent that certain changes and modifications may be made within the scope of the claims. Accordingly, the described embodiments are to be considered as illustrative and not restrictive, and the scope of the claims is not to be limited to details given herein, but may be modified within the scope and equivalents of the claims. In the claims, elements and/or steps do not imply any particular order of operation, unless explicitly stated in the claims.

Virtualization systems in accordance with the various embodiments may be implemented as hosted embodiments, non-hosted embodiments or as embodiments that tend to blur distinctions between the two, are all envisioned. Furthermore, various virtualization operations may be wholly or partially implemented in hardware. For example, a hardware implementation may employ a look-up table for modification of storage access requests to secure non-disk data.

Certain embodiments as described above involve a hardware abstraction layer on top of a host computer. The hardware abstraction layer allows multiple contexts to share the hardware resource. In one embodiment, these contexts are isolated from each other, each having at least a user application running therein. The hardware abstraction layer thus provides benefits of resource isolation and allocation among the contexts. In the foregoing embodiments, virtual machines are used as an example for the contexts and hypervisors as an example for the hardware abstraction layer. As described above, each virtual machine includes a guest operating system in which at least one application runs. It should be noted that these embodiments may also apply to other examples of contexts, such as containers not including a guest operating system, referred to herein as "OS-less containers" (see, e.g., www.docker.com). OS-less containers implement operating system-level virtualization, wherein an abstraction layer is provided on top of the kernel of an operating system on a host computer. The abstraction layer supports multiple OS-less containers each including an application and its dependencies. Each OS-less container runs as an isolated process in user space on the host operating system and shares the kernel with other containers. The OS-less container relies on the kernel's functionality to make use of resource isolation (CPU, memory, block I/O, network, etc.) and separate namespaces and to completely isolate the application's view of the operating environments. By using OS-less containers, resources can be isolated, services restricted, and processes provisioned to have a private view of the operating system with their own process ID space, file system structure, and network interfaces. Multiple containers can share the same kernel, but each container can be constrained to only use a defined amount of resources such as CPU, memory and I/O. The term "virtualized computing instance" as used herein is meant to encompass both VMs and OS-less containers.

Many variations, modifications, additions, and improvements are possible, regardless the degree of virtualization. The virtualization software can therefore include components of a host, console, or guest operating system that performs virtualization functions. Plural instances may be provided for components, operations or structures described herein as a single instance. Boundaries between various components, operations and data stores are somewhat arbitrary, and particular operations are illustrated in the context of specific illustrative configurations. Other allocations of functionality are envisioned and may fall within the scope of the invention(s). In general, structures and functionality presented as separate components in exemplary configurations may be implemented as a combined structure or component. Similarly, structures and functionality presented as a single component may be implemented as separate components. These and other variations, modifications, additions, and improvements may fall within the scope of the appended claim(s).

## Claims

1. A method for assigning containerized workloads to isolated network constructs within a networking environment (100) associated with a container-based cluster, comprising:
receiving, at the container-based cluster, a subnet port custom resource specification to initiate creation of a subnet port object to assign a node to a subnet within the networking environment (100), wherein one or more containerized workloads are running on the node;
in response to receiving the subnet port custom resource specification, creating the subnet port object; and
modifying a state of the container-based cluster to match a first intended state of the container-based cluster at least specified in the subnet port object, wherein modifying the state comprises assigning the node to the subnet in the networking environment (100).

2. The method of claim 1, wherein:
one or more internet protocol, IP, addresses in an IP classless inter-domain routing, CIDR, block are assigned to the subnet, and
assigning the node to the subnet comprises assigning an IP address of the one or more IP addresses assigned to the subnet to the node.

3. The method of claim 1 or 2, wherein the node comprises a pod virtual machine (104), VM, provisioned from a pod VM object in the container-based cluster, wherein the pod VM object comprises a custom resource introduced in the container-based cluster to extend an API of the container-based cluster.

4. The method of any of claims 1 to 3, wherein the node comprises a VM (104) provisioned from a VM object in the container-based cluster, wherein the VM object comprises a custom resource introduced in the container-based cluster to extend an API of the container-based cluster.

5. The method of claim 4, further comprising:
receiving a VM custom resource specification specifying parameters for creating the VM object, wherein the parameters at least reference a network interface object that defines a network attachment for the VM object;
receiving a network interface custom resource specification specifying parameters for creating the network interface object referenced by the VM custom resource specification, wherein the network interface object defines the network attachment for the VM (104) as the subnet; and
modifying the state of the container-based cluster to match a second intended state of the container-based cluster at least specified in the VM object and the network interface object, wherein modifying the state comprises provisioning the VM (104) in the container-based cluster with the network attachment.

6. The method of claim 5, comprising at least one of the following features:
wherein:
creating the subnet port object comprises generating the subnet port object based on the subnet port custom resource specification and the network interface object;
wherein the parameters for creating the network interface object comprise the network attachment for the VM (104) and at least one of:
virtual network interface card, VNIC, parameters,
guest network settings, or
IP address management, IPAM, configuration.

7. The method of any of claims 1 to 6, wherein:
the networking environment (100) is divided into one or more first level isolation constructs,
each of the one or more first level isolation constructs is divided into one or more second level isolation constructs,
each of the one or more second level isolation constructs is divided into one or more virtual private clouds,
each of the one or more virtual private clouds is divided into one or more subnets, and
the subnet belongs to a virtual private cloud of the one or more subnets.

8. A system comprising:
one or more processors (116); and
at least one memory (118), the one or more processors (116) and the at least one memory (118) configured to:
receive, at a container-based cluster, a subnet port custom resource specification to initiate creation of a subnet port object to assign a node to a subnet within a networking environment (100), wherein one or more containerized workloads are running on the node;
in response to receiving the subnet port custom resource specification, create the subnet port object; and
modify a state of the container-based cluster to match a first intended state of the container-based cluster at least specified in the subnet port object, wherein to modify the state comprises to assign the node to the subnet in the networking environment (100).

9. The system of claim 8, comprising at least one of the following features:
wherein:
one or more internet protocol, IP, addresses in an IP classless inter-domain routing, CIDR, block are assigned to the subnet, and
assigning the node to the subnet comprises assigning an IP address of the one or more IP addresses assigned to the subnet to the node;
wherein the node comprises a pod virtual machine (104), VM, provisioned from a pod VM object in the container-based cluster, wherein the pod VM object comprises a custom resource introduced in the container-based cluster to extend an API of the container-based cluster.

10. The system of claim 8 or 9, wherein the node comprises a VM (104) provisioned from a VM object in the container-based cluster, wherein the VM object comprises a custom resource introduced in the container-based cluster to extend an API of the container-based cluster.

11. The system of claim 10, wherein the one or more processors (116) and the at least one memory (118) configured to:
receive a VM custom resource specification specifying parameters for creating the VM object, wherein the parameters at least reference a network interface object that defines a network attachment for the VM object;
receive a network interface custom resource specification specifying parameters for creating the network interface object referenced by the VM custom resource specification, wherein the network interface object defines the network attachment for the VM (104) as the subnet; and
modify the state of the container-based cluster to match a second intended state of the container-based cluster at least specified in the VM object and the network interface object, wherein to modifying the state comprises to provision the VM (104) in the container-based cluster with the network attachment.

12. The system of claim 11, comprising at least one of the following features:
wherein:
to create the subnet port object comprises to generate the subnet port object based on the subnet port custom resource specification and the network interface object;
wherein the parameters for creating the network interface object comprise the network attachment for the VM (104) and at least one of:
virtual network interface card, VNIC, parameters,
guest network settings, or
IP address management, IPAM, configuration.

13. The system of any of claims 8 to 12, wherein:
the networking environment (100) is divided into one or more first level isolation constructs,
each of the one or more first level isolation constructs is divided into one or more second level isolation constructs,
each of the one or more second level isolation constructs is divided into one or more virtual private clouds,
each of the one or more virtual private clouds is divided into one or more subnets, and
the subnet belongs to a virtual private cloud of the one or more subnets.

14. A non-transitory computer-readable medium comprising instructions that, when executed by one or more processors (116) of a computing system, cause the computing system to perform operations for assigning containerized workloads to isolated network constructs within a networking environment (100) associated with a container-based cluster, the operations comprising:
receiving, in the container-based cluster, a subnet port custom resource specification to initiate creation of a subnet port object to assign a node to a subnet within the networking environment (100), wherein one or more containerized workloads are running on the node;
in response to receiving the subnet port custom resource specification, creating the subnet port object; and
modifying a state of the container-based cluster to match a first intended state of the container-based cluster at least specified in the subnet port object, wherein modifying the state comprises assigning the node to the subnet in the networking environment (100).

15. The non-transitory computer-readable medium of claim 14, comprising at least one of the following features:
wherein:
one or more internet protocol, IP, addresses in an IP classless inter-domain routing, CIDR, block are assigned to the subnet, and
assigning the node to the subnet comprises assigning an IP address of the one or more IP addresses assigned to the subnet to the node;
wherein the node comprises a pod virtual machine (104), VM, provisioned from a pod VM object in the container-based cluster, wherein the pod VM object comprises a custom resource introduced in the container-based cluster to extend an API of the container-based cluster;
wherein the node comprises a VM (104) provisioned from a VM object in the container-based cluster, wherein the VM object comprises a custom resource introduced in the container-based cluster to extend an API of the container-based cluster.
